(19) Europäisches Patentamt / European Patent Office / Office européen des brevets

(11) **EP 4 188 796 B1**

(12) **FASCICULE DE BREVET EUROPEEN**

(45) Date de publication et mention de la délivrance du brevet:
**30.04.2025 Bulletin 2025/18**

(21) Numéro de dépôt: **21749640.5**

(22) Date de dépôt: **28.07.2021**

(51) Classification Internationale des Brevets (IPC):
**B64C 1/14** (2006.01)

(52) Classification Coopérative des Brevets (CPC):
**B64C 1/143; B64C 1/1461**

(86) Numéro de dépôt international:
**PCT/EP2021/071110**

(87) Numéro de publication internationale:
**WO 2022/023402 (03.02.2022 Gazette 2022/05)**

(54) **PORTE D'AÉRONEF À DOUBLE COURBURE ET À MOYENS DE VERROUILLAGE OPTIMISÉS**

DOPPELBOGEN-FLUGZEUGTÜR MIT OPTIMIERTEN VERRIEGELUNGSMITTELN

DOUBLE-CURVED AIRCRAFT DOOR WITH OPTIMISED LOCKING MEANS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.07.2020 FR 2008210**

(43) Date de publication de la demande:
**07.06.2023 Bulletin 2023/23**

(73) Titulaire: **Latecoere**
**31500 Toulouse (FR)**

(72) Inventeurs:
• **DEVILLEZ, Sébastien**
**31240 Saint Jean (FR)**
• **DUCASSE, Jean, François**
**32340 Miradoux (FR)**

(74) Mandataire: **Junca, Eric**
**Junca & Associés**
**1 Rond Point Flotis**
**31240 Saint Jean (FR)**

(56) Documents cités:
**DE-A1- 102008 043 023    FR-A1- 2 550 754
GB-A- 2 042 060**

**Description**

DOMAINE TECHNIQUE

L'invention concerne le domaine de l'aéronautique et vise plus particulièrement une porte d'aéronef à double courbure comportant des moyens de verrouillage particulièrement adaptés à cette configuration.

Les portes d'aéronef à double courbure sont destinées à s'intégrer dans le fuselage d'un aéronef, et plus précisément sur des portions de ce dernier qui présentent des courbures dans plusieurs directions. Ces portes d'aéronef peuvent par exemple présenter une première courbure autour d'un axe horizontal (correspondant à la forme générale-lement cylindrique du fuselage des avions) ainsi qu'une deuxième courbure suivant un axe vertical, horizontal ou une combinaison des deux. Ces portes d'aéronef sont spécifiquement destinées à s'intégrer dans les portions d'un aéronef présentant des formes complexes dues à différentes variations de courbures.

Les portes d'aéronef à double courbure permettent de mettre en service des ouvertures même dans les zones difficiles telles que les zones de nez ou de queue d'un avion.

Cependant, les moyens de verrouillage des portes d'aéronef à double courbure sont plus complexes que ceux des portes à simple courbure et nécessitent des adaptations pour la bonne tenue en pression de la porte lorsque l'aéronef est en vol avec sa cabine pressurisée.

ART ANTÉRIEUR

Les portes d'aéronef à simple courbure comme décrites dans le brevet GB 2 042 060 A comportent traditionnellement un ouvrant articulé par rapport à un encadrement ainsi que des butées d'ouvrant et des butées d'encadrement.

Les portes d'aéronef à double courbure actuellement en service comportent généralement :

- un ouvrant et un encadrement, l'ouvrant étant articulé par rapport à l'encadrement ;
- des moyens de verrouillage comportant des butées d'ouvrant et des butées d'encadrement, chaque butée d'ouvrant étant positionnée contre une butée d'encadrement correspondante lorsque la porte d'aéronef est dans sa configuration de verrouillage, chaque butée d'ouvrant et sa butée d'encadrement correspondante formant une paire de butées complémentaires qui comportent des surfaces d'appui qui sont en contact selon une aire de contact lorsque la porte d'aéronef est dans sa configuration de verrouillage, lesdites paires de butées complémentaires étant agencées sur un premier bord latéral et sur un deuxième bord latéral de la porte, les aires de contact correspondantes étant agencées selon au moins deux ensembles : un premier ensemble d'aires de contact du premier bord latéral ; et un deuxième ensemble d'aires de contact du deuxième bord latéral.

Ces portes d'aéronef à double courbure de l'art antérieur transmettent l'effort dû à la pressurisation qu'elles subissent par l'intermédiaire de butées fixées sur l'ouvrant et qui s'appuient sur des butées complémentaires fixées sur l'encadrement.

Ces portes d'aéronef sont munies d'un mécanisme permettant le placement de chaque butée en vis-à-vis de sa butée complémentaire lors du verrouillage de la porte. Il s'agit par exemple d'un mécanisme permettant un mouvement de soulèvement ou d'abaissement de l'ouvrant, ou encore d'un mécanisme de butées mobiles.

Il existe actuellement trois types d'architectures courantes pour les portes d'aéronef à double courbure, en ce qui concerne l'agencement des moyens de verrouillage.

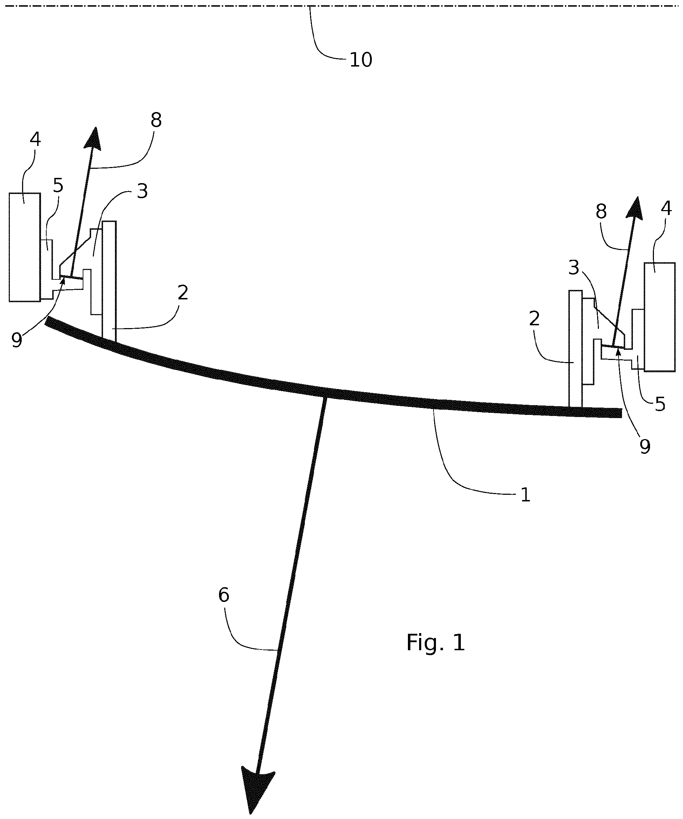

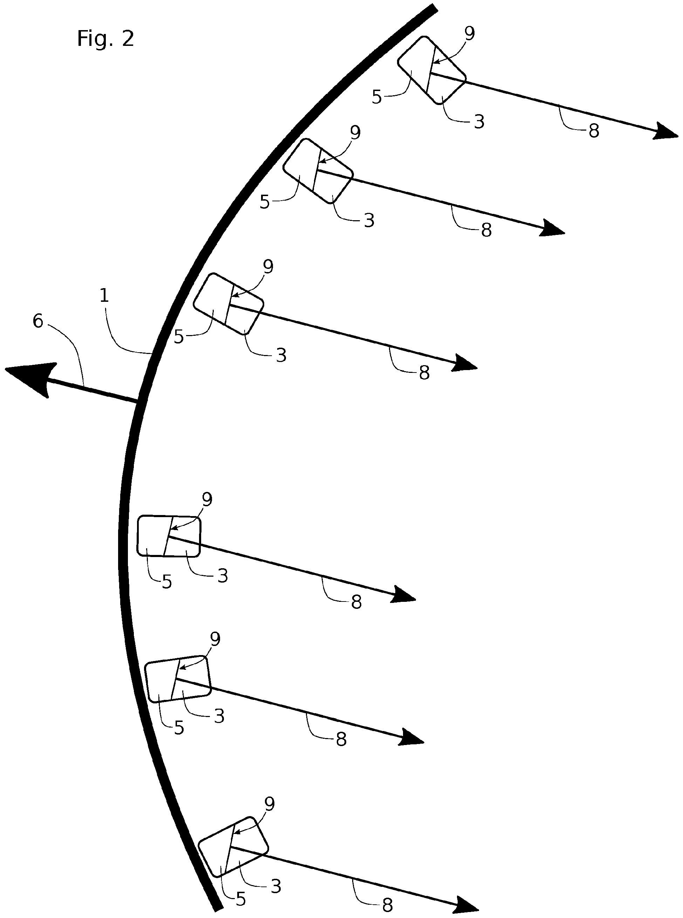

Selon une première architecture de l'art antérieur, illustrée aux figures 1 et 2, les moyens de verrouillage sont agencés pour que les résultantes des forces de réaction à la pression s'exerçant sur la porte soient parallèles à la résultante de pression.

Sur la figure 1, la porte d'aéronef de l'art antérieur est vue de dessus en coupe et est destinée à un aéronef s'étendant selon un axe longitudinal 10. La porte comprend un panneau extérieur 1 généralement dénommé « peau », une structure de porte 2 sur laquelle sont fixées des butées 3 d'ouvrant, et un encadrement 4 sur lequel sont fixées des butées 5 d'encadrement. Sur les vues en coupe des figures 1 et 2, la porte d'aéronef de l'art antérieur est représentée en configuration de verrouillage, avec les butées 3 d'ouvrant disposées chacune contre une butée 5 d'encadrement complémentaire.

Lorsque la cabine de l'aéronef est pressurisée, cette porte de l'art antérieur subit des efforts qui ont pour origine la différence de pression entre l'intérieur et l'extérieur de la cabine, de part et d'autre du panneau extérieur 1.

Le vecteur 6 illustre la résultante de pression, qui est la force totale, due à la pressurisation, s'exerçant sur la porte.

Chaque butée 3 d'ouvrant et sa butée 5 d'encadrement sont en contact par une aire de contact dont la forme et l'orientation, suivant le plan de contact 9, déterminent la direction de la force de réaction (vecteur 8) que chaque butée 5 d'encadrement exerce sur la butée 3 d'ouvrant.

# EP 4 188 796 B1

Selon cette première architecture de l'art antérieur, les formes et la disposition des butées 3, 5 sont choisies pour que les forces de réaction exercées par les butées 5 d'encadrement soient toutes parallèles à la direction du vecteur 6 de la résultante de pression.

La figure 2 montre les vecteurs 8 de la force de réaction parallèles à la résultante de pression. Pour assurer cette géométrie, les paires de butées 3, 5 sont toutes différentes, avec chacune un plan de contact orienté différemment relativement au corps de chaque butée, en fonction de la position de la paire de butées 3, 5 sur la porte et le fuselage.

Ce type d'architecture nécessite ainsi de concevoir et fabriquer de nombreuses pièces spécifiques relatives aux butées, spécifiques à chaque emplacement de verrouillage de la porte. La fabrication d'une porte d'aéronef selon cette première architecture de l'art antérieur entraine des complexités de fabrication et des surcouts associés. Les butées obtenues sont optimisées du point de vue de la masse et de la tenue mécanique, mais sont toutes différentes et engendrent, en plus du cout de fabrication élevé, des couts pièce à l'unité plus élevés, ainsi que des surcouts de maintenance en raison des nombreuses références de butées à stocker comme pièces de rechange.

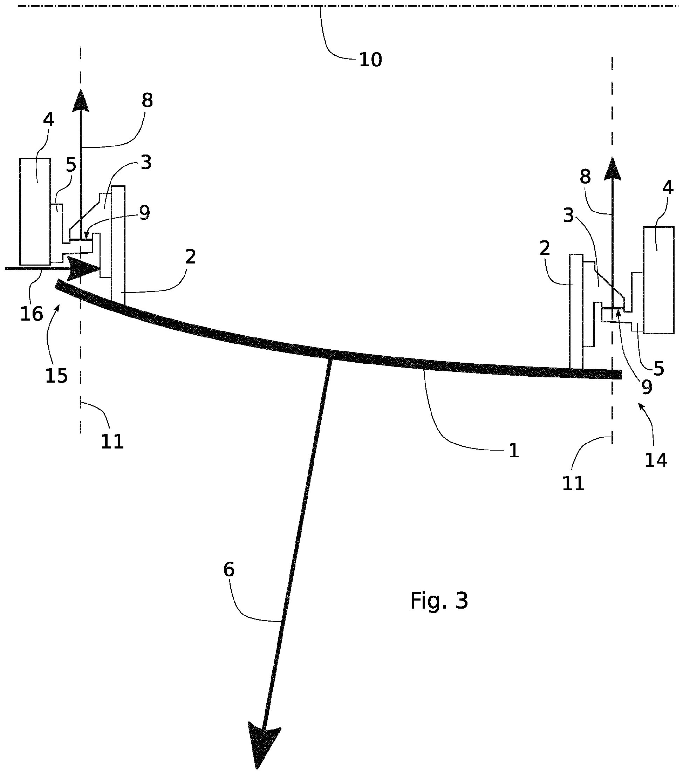

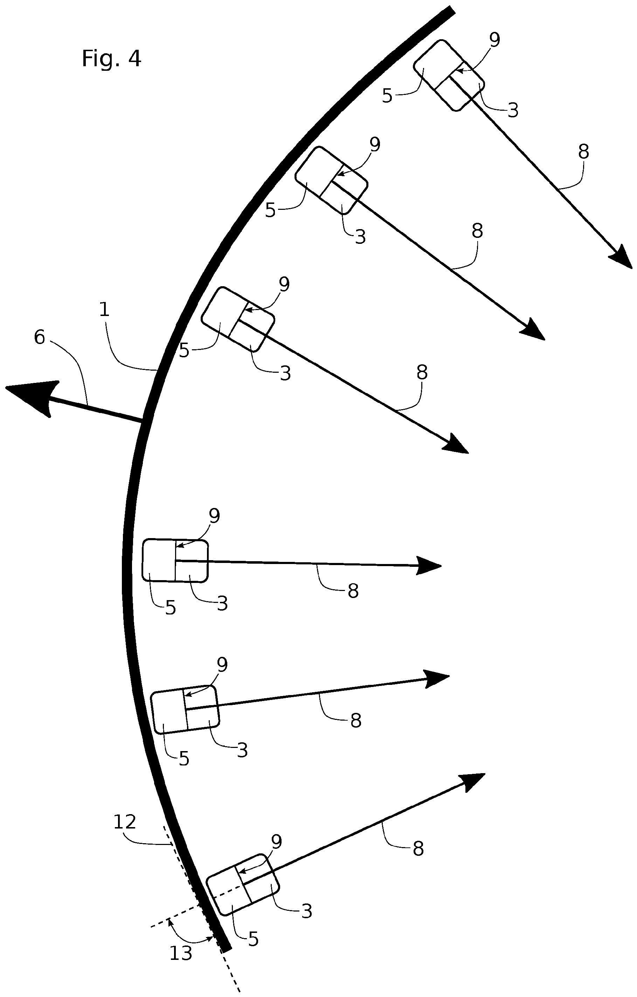

Les figures 3 et 4 illustrent une deuxième architecture de porte d'aéronef à double courbure selon l'art antérieur. Les éléments similaires à la première architecture décrite précédemment portent les mêmes numéros de renvoi aux figures.

Selon cette deuxième architecture de l'art antérieur, les moyens de verrouillage sont agencés pour que le vecteur 8 de réaction de chaque butée 5 d'encadrement soit :

- contenu dans un plan perpendiculaire 11 à l'axe longitudinal 10 ;
- perpendiculaire à la tangente au panneau extérieur 1 ou à une surface adéquate proche de ce panneau extérieur 1.

Sur le bas de la figure 4, l'un des vecteurs 8 est illustré avec la tangente 12 au panneau extérieur correspondante, l'angle 13 étant donc un angle droit.

Sur cette deuxième architecture de l'art antérieur, toutes les butées 3 d'ouvrant et toutes les butées 5 d'encadrement du premier bord latéral 14 de la porte sont identiques entre elles. Il en va de même pour toutes les butées 3, 5 du deuxième bord latéral 15 de la porte, qui sont identiques entre elles.

Une telle porte d'aéronef ne nécessite ainsi que de deux références de butée 3 d'ouvrant et deux références de butée 5 d'encadrement.

Cependant, la différence d'orientation entre le vecteur 6 de la résultante de pression et les vecteurs 8 de réaction de chaque butée 5 d'encadrement, génère un effort tendant à déplacer l'ouvrant de la porte dans une direction latérale (vers la gauche dans l'exemple illustré à la figure 3). Cet effort indésirable nécessite l'adjonction de butées axiales 16 additionnelles pour le maintien de la porte.

Cette deuxième architecture de l'art antérieur nécessite donc des pièces supplémentaires pour la réalisation des butées axiales 16 additionnelles et entrainent une augmentation de la complexité des moyens de verrouillage, entrainant des temps de réglage augmentés lors de la production et de la maintenance de la porte. De plus, des renforcements locaux des structures de porte et d'encadrement au niveau des butées axiales 16 additionnelles sont également à prévoir, avec par conséquent une augmentation de la masse de l'aéronef et une augmentation du cout de fabrication.

Ces butées additionnelles génèrent aussi un risque supplémentaire de blocage de la porte en cas d'accident de l'aéronef dans la mesure où une zone de proximité est créée entre l'ouvrant et l'encadrement, ce qui impose d'utiliser des éléments élastiques limitant les efforts de contacts.

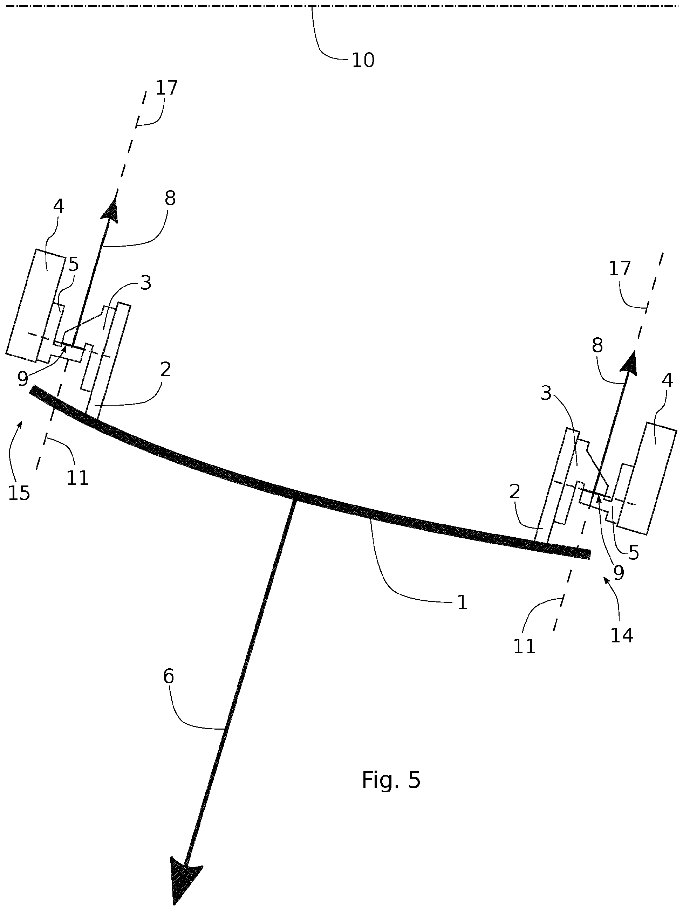

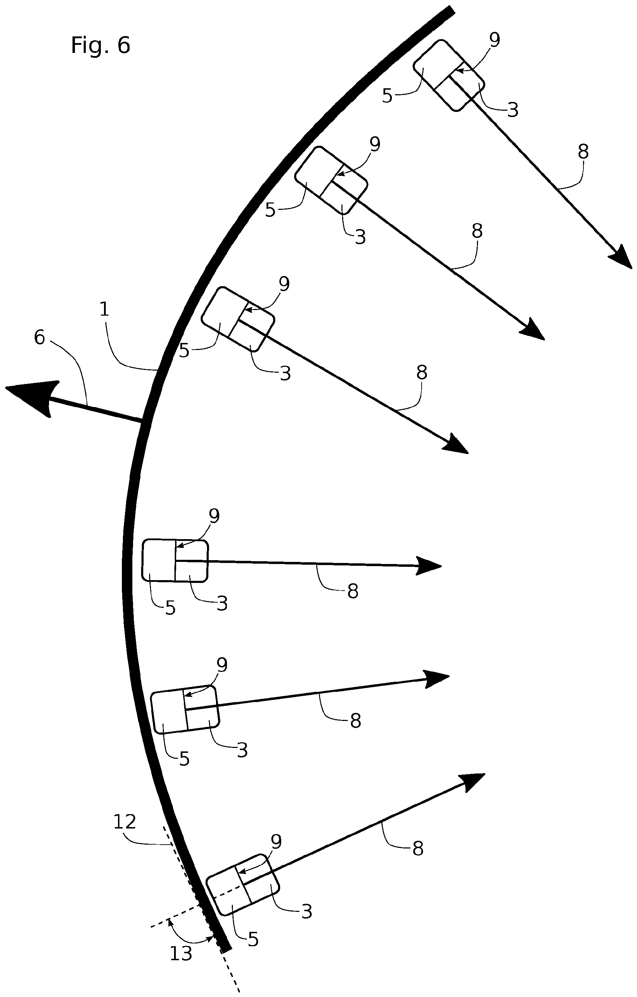

Les figures 5 et 6 illustrent une troisième architecture de porte d'aéronef à double courbure selon l'art antérieur. Les éléments similaires aux précédentes architectures de l'art antérieur décrites précédemment portent les mêmes numéros de renvoi aux figures.

Selon cette troisième architecture de l'art antérieur, le vecteur 8 de réaction de chaque butée 5 d'encadrement est :

- contenu dans un plan vertical 17 qui est parallèle au vecteur 6 de la résultante de pression ;
- perpendiculaire à la tangente au panneau extérieur 1 ou à une surface adéquate proche de ce panneau extérieur 1.

Sur le bas de la figure 6, l'un des vecteurs 8 est illustré avec la tangente 12 au panneau extérieur correspondante, l'angle 13 étant donc un angle droit.

Comme pour l'architecture précédente, cette troisième architecture de l'art antérieur met en œuvre des butées 3 d'ouvrant et des butées 5 d'encadrement qui sont toutes identiques entre elles sur le premier bord latéral 14 d'une part, et sur le deuxième bord latéral 15, d'autre part. Des butées axiales 16 additionnelles ne sont de plus pas nécessaires.

Cependant, la structure portant le fuselage des aéronefs est généralement constituée par des cadres s'étendant selon des plans perpendiculaires à l'axe longitudinal 10 de l'aéronef. Avec cette troisième architecture de l'art intérieur, l'encadrement de porte 4 est réalisé par des segments de cadre qui ne sont pas alignés avec les cadres de la structure du fuselage de l'aéronef. Ceci implique des jonctions complexes entre le fuselage de l'aéronef et l'encadrement 4 de porte

3

avec des cheminements d'efforts structuraux dégradés. Les défauts qui en découlent sont notamment la nécessité d'un renforcement local pour obtenir la tenue mécanique requise (ce qui entraine une augmentation de la masse de l'aéronef), la nécessité d'augmenter l'épaisseur brute de l'encadrement 4 de porte et/ou des cadres de la structure du fuselage, ce qui entraine une augmentation des temps d'usinage, et un assemblage localement plus complexe au niveau de l'encadrement 4 de porte. La masse et le cout de fabrication d'un aéronef sont ainsi impactés négativement.

De plus, si ces inconvénients peuvent être considérés comme acceptables pour certaines portes d'aéronef métalliques, ils sont en revanche rédhibitoires lorsqu'il est question de structure du fuselage et d'encadrement de porte d'aéronef en matériaux composites.

EXPOSÉ DE L'INVENTION

L'invention a pour but d'améliorer les portes d'aéronef de l'art antérieur.

À cet effet, l'invention vise une porte d'aéronef à double courbure destinée à un aéronef qui s'étend selon un axe longitudinal, cette porte d'aéronef présentant au moins une configuration de verrouillage et une configuration d'ouverture, cette porte d'aéronef comportant :

- un ouvrant et un encadrement, l'ouvrant étant articulé par rapport à l'encadrement ;
- des moyens de verrouillage comportant des butées d'ouvrant et des butées d'encadrement, chaque butée d'ouvrant étant positionnée contre une butée d'encadrement correspondante lorsque la porte d'aéronef est dans sa configuration de verrouillage, chaque butée d'ouvrant et sa butée d'encadrement correspondante formant une paire de butées complémentaires qui comportent des surfaces d'appui qui sont en contact selon une aire de contact lorsque la porte d'aéronef est dans sa configuration de verrouillage, lesdites paires de butées complémentaires étant agencées sur un premier bord latéral et sur un deuxième bord latéral de la porte d'aéronef, les aires de contact correspondantes étant agencées selon au moins deux ensembles : un premier ensemble d'aires de contact du premier bord latéral ; et un deuxième ensemble d'aires de contact du deuxième bord latéral.

Dans cette porte d'aéronef :

- l'isobarycentre de chaque aire de contact du premier bord latéral est disposé dans un premier plan perpendiculaire, dans un état monté de la porte d'aéronef, audit axe longitudinal ;
- l'isobarycentre de chaque aire de contact du deuxième bord latéral est disposé dans un deuxième plan perpendiculaire, dans l'état monté de la porte d'aéronef, audit axe longitudinal ;
- pour chaque aire de contact, la normale à l'aire de contact passant par son isobarycentre, passe par l'axe d'un cylindre moyen, le cylindre moyen étant défini comme le cylindre à base circulaire dont l'axe est parallèle, dans l'état monté de la porte d'aéronef, audit axe longitudinal et dont le rayon vérifie la condition suivante : la somme des distances entre l'isobarycentre de chaque aire de contact du premier bord latéral et le cylindre moyen est égal à la somme des distances entre l'isobarycentre de chaque aire de contact du deuxième bord latéral et le cylindre moyen ;
- pour chaque aire de contact, la normale à l'aire de contact passant par son isobarycentre forme un angle de déviation avec un plan perpendiculaire, dans l'état monté de la porte d'aéronef, audit axe longitudinal, les angles de déviation de toutes les aires de contact étant égaux.

La porte d'aéronef selon l'invention bénéficie d'une tenue optimisée au niveau de ses butées d'ouvrant et de ses butées d'encadrement, en rapport avec la double courbure mise en jeu. Cette optimisation est obtenue avec une unique référence de butée d'ouvrant et une unique référence de butée d'encadrement pour chacun des bords latéraux de la porte.

Le cout des butées à l'unité est ainsi abaissé du fait du volume fabriqué plus important. Un certain niveau de standardisation peut ainsi être mis en œuvre, et le nombre de références de butées est réduit, ce qui optimise les opérations d'approvisionnement, de production, et de stock de pièces de rechange.

Aucun effort parasite dû à la pressurisation de la cabine de l'aéronef, ne s'exerce sur la porte, et notamment aucun effort latéral. Aucune butée additionnelle n'est donc requise pour cette porte d'aéronef, ce qui permet de maintenir une masse acceptable, et un cout de fabrication maitrisé. Le réglage de la porte est simplifié par rapport aux portes comportant des butées additionnelles, ce qui entraine un gain de temps et de cout sur la fabrication, le montage, et la maintenance.

Par ailleurs, la porte d'aéronef peut être montée dans un aéronef en mettant en correspondance directe l'encadrement de porte avec la structure de l'aéronef portant le fuselage. La structure d'aéronef peut même s'étendre jusqu'au contour de la porte et constituer elle-même l'encadrement de porte. Cet agencement présente des avantages relatifs à une optimisation de l'épaisseur de la matière brute de l'encadrement de porte, avec une diminution correspondante du temps d'usinage et donc un gain sur le cout de fabrication.

Au niveau de l'encadrement de porte, les efforts structuraux issus du fuselage cheminent de façon fluide, ce qui limite les renforcements locaux et permet d'optimiser la masse générale de l'aéronef.

La porte d'aéronef selon l'invention peut comporter les caractéristiques additionnelles suivantes, seules ou en combinaison :

- l'isobarycentre de chaque aire de contact du premier bord latéral est également disposé sensiblement sur une première surface parallèle à la surface extérieure de l'ouvrant ;

- l'isobarycentre de chaque aire de contact du deuxième bord latéral est également disposé sensiblement sur une deuxième surface parallèle à la surface extérieure de l'ouvrant ;

- l'axe du cylindre moyen et la direction résultante de pression sont sécants, la direction résultante de pression étant définie comme la direction de la force résultante s'appliquant sur l'ouvrant de la porte d'aéronef lorsqu'elle est soumise à une pression ;

- l'angle de déviation est égal à l'angle formé entre la direction résultante de pression et un plan perpendiculaire audit axe longitudinal, la direction résultante de pression étant définie comme la direction de la force résultante s'appliquant sur l'ouvrant de la porte d'aéronef lorsqu'elle est soumise à une pression ;

- les butées d'encadrement du premier bord latéral sont identiques entre elles ;

- les butées d'encadrement du deuxième bord latéral sont identiques entre elles ;

- les butées d'ouvrant du premier bord latéral sont identiques entre elles ;

- les butées d'ouvrant du deuxième bord latéral sont identiques entre elles ;

- les aires de contact s'étendent selon un plan de contact orienté angulairement sur la butée correspondante selon au moins une direction ;

- les aires de contact ont une forme rectangulaire plane ou circulaire plane ;

- la première surface parallèle à la surface extérieure de l'ouvrant est espacée d'une première distance constante par rapport à la surface extérieure de l'ouvrant ;

- la deuxième surface parallèle à la surface extérieure de l'ouvrant est espacée d'une deuxième distance constante par rapport à la surface extérieure de l'ouvrant ;

- la première distance constante et la deuxième distance constante sont différentes ;

- la première distance constante et la deuxième distance constante sont sensiblement égales ;

- la porte comprend un mécanisme d'ouverture, et comprend en outre un ensemble supplémentaire de butées définissant des aires de contact dont la normale passant par leur isobarycentre passe à l'écart de l'axe du cylindre moyen, d'un côté correspondant à une opposition à la cinématique du mécanisme d'ouverture.

Selon un autre objet, l'invention vise un aéronef équipé d'une porte à double courbure telle que décrite ci-dessus.

PRÉSENTATION DES FIGURES

D'autres caractéristiques et avantages de l'invention ressortiront de la description non limitative qui suit, en référence aux dessins annexés dans lesquels :

- La figure 1 illustre une porte d'aéronef de l'art antérieur selon une première architecture, vue de dessus en coupe ;

- La figure 2 illustre la porte d'aéronef de la figure 1, vue de côté ;

- La figure 3 illustre une porte d'aéronef de l'art antérieur selon une deuxième architecture, vue de dessus en coupe ;

- La figure 4 illustre la porte d'aéronef de la figure 3, vue de côté ;

- La figure 5 illustre une porte d'aéronef de l'art antérieur selon une troisième architecture, vue de dessus en coupe ;

- La figure 6 illustre la porte d'aéronef de la figure 5, vue de côté ;

- La figure 7 illustre une porte d'aéronef selon l'invention, vue de dessus ;

- La figure 8 illustre la porte d'aéronef de la figure 7, vue de côté ;

- La figure 9 illustre une paire de butées des moyens de verrouillage de la porte des figures 7 et 8, vues en coupe ;

- La figure 10 représente les butées de la figure 9, en position de verrouillage et vues de dessus ;

- La figure 11 est un schéma détaillant l'agencement des butées de la porte des figures 7 et 8.

Sur ces différentes vues, les vecteurs représentants les forces sont uniquement illustratifs et ne sont notamment pas à l'échelle les uns par rapport aux autres.

DESCRIPTION DÉTAILLÉE

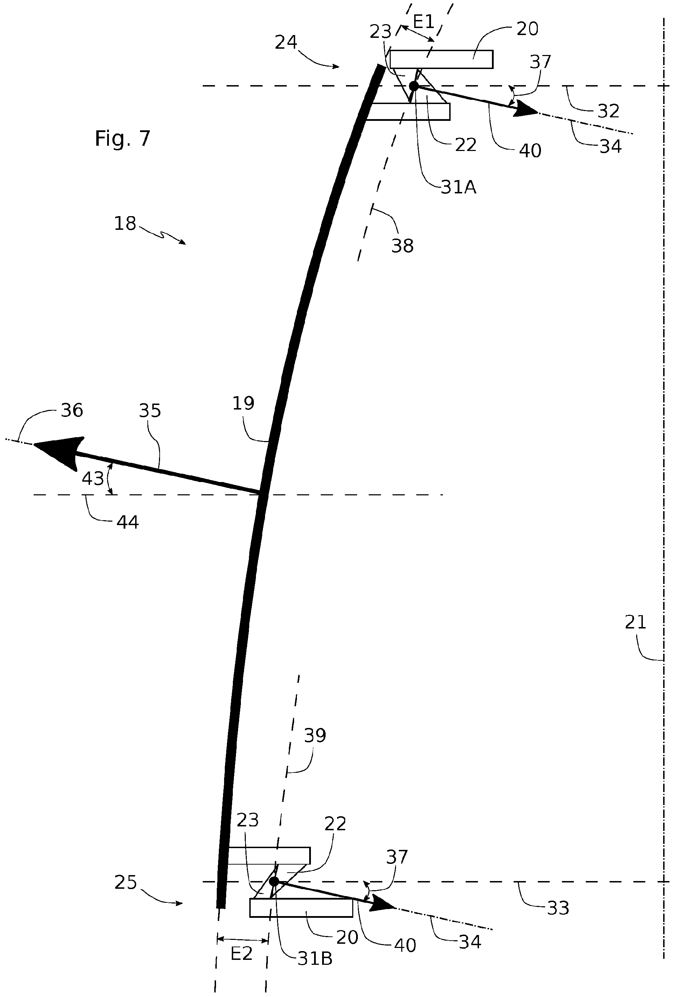

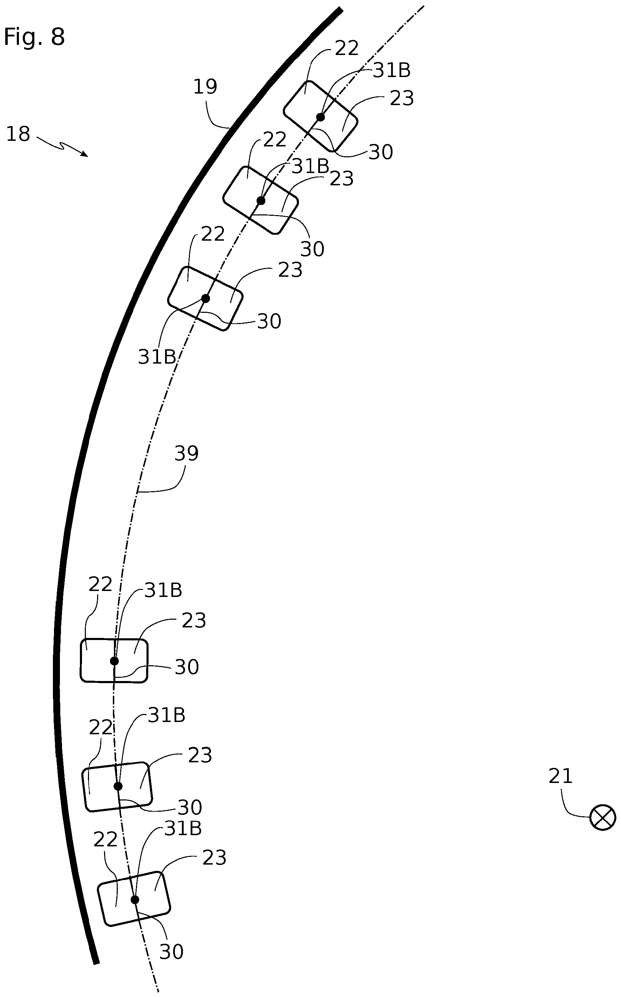

Les figures 7 et 8 illustrent une porte d'aéronef 18 à double courbure qui comprend un encadrement 20 et un ouvrant 19 (vus de dessus en coupe sur la figure 7, et vus de côté sur la figure 8).

L'ouvrant 19 est mobile par rapport à l'encadrement 20 grâce à un mécanisme classique d'ouverture et de fermeture (non représenté), de sorte que la porte 18 peut adopter notamment une configuration d'ouverture dans laquelle l'ouvrant 19 est dégagé de l'espace délimité par l'encadrement 20, et une configuration de verrouillage dans laquelle l'ouvrant 19 est fermé sur l'encadrement 20 et est verrouillé à celui-ci de manière étanche pour permettre le vol de l'aéronef.

Cette porte 18 est représentée en position de montage dans un aéronef qui s'étend selon un axe longitudinal 21. La porte d'aéronef 18 présente ici une double courbure selon deux axes perpendiculaires : une première courbure visible sur la coupe de la figure 7, et une deuxième courbure visible sur la coupe de la figure 8.

L'ouvrant 19 comporte des butées 22 d'ouvrant et l'encadrement 20 comporte des butées 23 encadrement, faisant partie des moyens de verrouillage de la porte. Les butées 22, 23 sont agencées de sorte que chaque butée 22 d'ouvrant est positionnée contre une butée 23 d'encadrement correspondante lorsque la porte d'aéronef est dans sa configuration de verrouillage (qui est celle représentée aux figures 7 et 8).

Sur la coupe de la figure 7, deux paires de butées sont visibles : une première paire de butées 22, 23 sur un premier bord latéral 24 de la porte, et une deuxième paire de butées 22, 23 sur un deuxième bord latéral 25 de la porte.

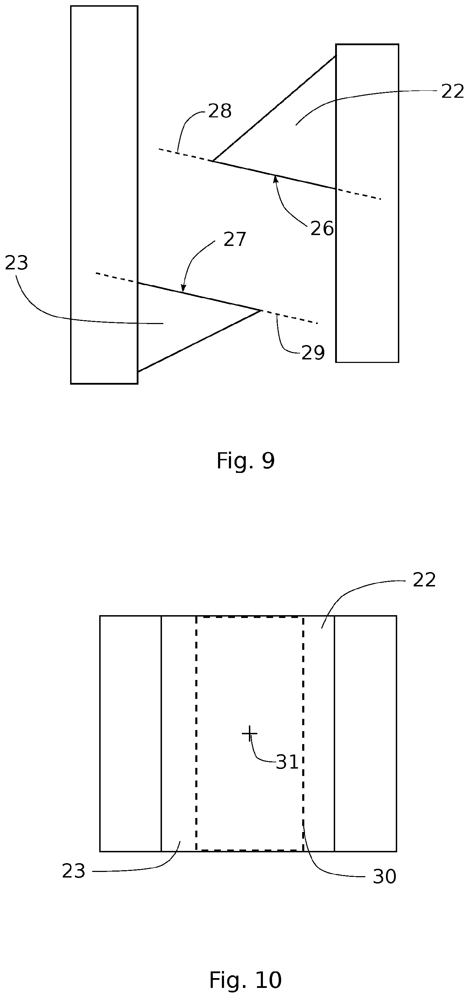

La figure 9 illustre schématiquement l'une de ces paires de butées 22, 23, vues en coupe, lorsque la porte est en dehors de sa position de verrouillage. Chaque butée 22, 23 comporte respectivement une surface d'appui 26, 27 constituée dans cet exemple simplifié par une surface plane rectangulaire, s'étendant respectivement selon un plan 28, 29. Les surfaces d'appui 26, 27 présentent une orientation angulaire déterminant la direction des forces en jeu au contact des butées 22, 23 d'une même paire en position de verrouillage. Au niveau du corps des butées 22, 23, les plans 28, 29 présentent ainsi la même orientation angulaire autour d'un axe perpendiculaire au plan de la figure 9 quand les butées 22, 23 d'une même paire sont en positon de verrouillage. De plus, les butées 22, 23 sont fixées respectivement sur l'ouvrant 19 et l'encadrement 20 selon une orientation angulaire les faisant pointer vers un même axe perpendiculaire au plan de la figure 8.

En variante, les surfaces d'appui 26, 27 peuvent présenter toute forme adaptée à produire une force dont la direction est maitrisée. Des surfaces présentant une certaine élasticité, ou des surfaces rotulantes selon une certaine limite disposées sur la butée d'ouvrant ou inversement, peuvent cependant être prévues pour garantir un contact optimal des surfaces d'appui 26, 27.

La figure 10 illustre la paire de butées de la figure 9, vue de dessus par rapport à la vue de la figure 9, lorsque la porte est en configuration de verrouillage. La surface d'appui 26 est positionnée contre la surface d'appui 27, et une aire de contact 30 (schématisée par la zone en pointillés) est délimitée par les portions en contact des surfaces d'appui 26, 27. L'aire de contact 30 correspond dans cet exemple à un rectangle plan parallèle au plan 29.

Quelle que soit la forme des surfaces 26, 27, une aire de contact 30 en deux ou trois dimensions sera délimitée, même pour des contacts ponctuels ou linéaires théoriques, compte tenu notamment de la déformation élastique des matériaux sur les pièces réelles. La forme de cette aire de contact 30 est destinée à générer une force de contact perpendiculaire aux plans 28, 29. L'aire de contact 30 peut présenter toute autre forme en fonction des surfaces de contact des butées 22, 23, par exemple une forme circulaire plane.

Ainsi, quelle que soit la forme des butées 22, 23, la zone de contact entre les deux butées d'une même paire de butées délimitera une aire de contact 30 de forme plus ou moins complexe, et qui comportera un isobarycentre 31. Sur l'exemple illustré à la figure 10, l'isobarycentre 31 est simplement à l'intersection des médianes de l'aire de contact 30 en forme de rectangle.

Les butées 22, 23 de la porte d'aéronef sont agencées pour d'une part positionner les isobarycentres 31 correspondant à chaque paire de butée 22, 23, et d'autre part orienter les forces dont la résultante s'applique à ces isobarycentres 31, en réaction à la résultante de pression sur la porte d'aéronef.

En référence à la figure 7, l'isobarycentre 31A de chaque aire de contact 30 du premier bord latéral 24 est disposé dans un premier plan 32 perpendiculaire à l'axe longitudinal 21. Autrement dit, tous les isobarycentres 31A sont situés dans un même plan 32 qui est perpendiculaire à l'axe longitudinal 21.

Il en va de même pour le deuxième bord latéral 25 : l'isobarycentre 31B de chaque aire de contact 30 du deuxième bord latéral 25 est disposé dans un deuxième plan 33 perpendiculaire à l'axe longitudinal 21. Tous les isobarycentres 31B étant donc situés dans un même plan 33 perpendiculaire à l'axe longitudinal 21.

De plus, selon une caractéristique préférée, les isobarycentres 31A du premier bord latéral 24 sont également disposés sur une première surface 38 parallèle à la surface extérieure de l'ouvrant 19. La surface extérieure de l'ouvrant 19 correspond au profil général du fuselage de l'aéronef et de l'ouvrant 19 qui s'intègre nécessairement dans ce profil. La surface 38 est donc une surface courbe qui est en tout point écartée d'une distance E1 constante par rapport à la surface extérieure de l'ouvrant 19.

Selon une caractéristique préférée, il en va de même pour les isobarycentres 31B du deuxième bord latéral 25 qui sont de plus disposés sur une deuxième surface 39 parallèle à la surface extérieure de l'ouvrant 19. La surface 39 est également une surface courbe qui est en tout point écartée d'une distance E2 constante par rapport à la surface extérieure de l'ouvrant 19.

Si la caractéristique relative aux surfaces 38 et 39 est mise en œuvre, l'écartement E1 entre la surface 38 et la surface extérieure de l'ouvrant 19 peut être différente de l'écartement E2 entre la surface 39 et la surface extérieure de l'ouvrant 19, comme dans l'exemple illustré. En variante, E1 et E2 peuvent être égaux bien que cela ne soit pas nécessaire.

La figure 8 illustre la porte d'aéronef 18 vue de côté selon une vue montrant uniquement les butées 22, 23 du deuxième bord latéral 25 de la porte.

En résumé :

- l'isobarycentre 31A de chaque aire de contact 30 du premier bord latéral 24 est disposé sur la ligne d'intersection entre : un premier plan 32 perpendiculaire à axe longitudinal 21 ; et une première surface 38 parallèle à la surface extérieure de l'ouvrant 19 ;
- l'isobarycentre 31B de chaque aire de contact 30 du deuxième bord latéral 25 est disposé sur la ligne d'intersection entre : un deuxième plan 33 perpendiculaire à l'axe longitudinal 21 ; et une deuxième surface 39 parallèle à la surface extérieure de l'ouvrant 19.

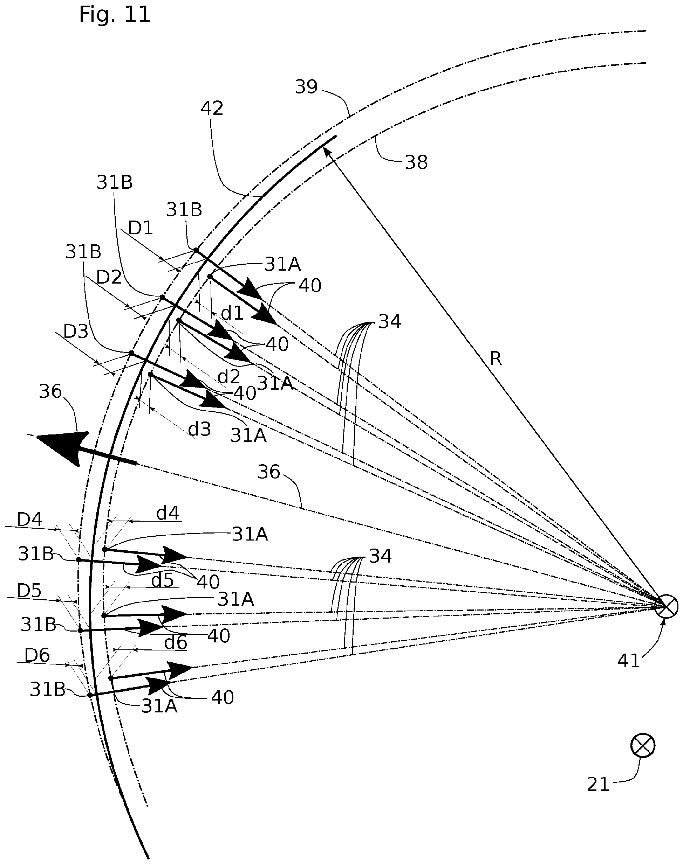

Les figures 7 et 11 illustrent l'agencement permettant d'obtenir l'orientation angulaire souhaitée pour les surfaces d'appui 26, 27, qui va conditionner l'orientation angulaire des forces s'exerçant au niveau des butées 22, 23.

En référence à la figure 7, pour chacune des aires de contact 30, aussi bien pour le premier bord latéral 24 que pour le deuxième bord latéral 25, la normale 34 à l'aire de contact 30 passant par son isobarycentre 31 est orientée avec un angle de déviation 37 par rapport au plan 32 ou 33 correspondant. La valeur de l'angle 37 est égale à la valeur de l'angle 43 entre la direction 36 du vecteur 35 de la résultante de pression et le plan 44 perpendiculaire à l'axe longitudinal 21.

L'angle formé entre une droite ou un vecteur et un plan est mesuré dans le plan qui est perpendiculaire audit plan et qui contient la droite ou le vecteur.

La direction 36 de la résultante de pression est ici définie comme la direction de la force résultante qui s'applique sur l'ouvrant 19 soumis à la pressurisation. Cette direction 36 est fonction des paramètres géométriques de la porte 18. Le vecteur 35 de la résultante de pression est donc la force qui s'exerce sur l'ouvrant 19 lorsque la porte d'aéronef 18 est montée dans un aéronef qui est en situation de vol et dont la cabine est pressurisée créant ainsi un différentiel de pression de part et d'autre de l'ouvrant 19. La résultante de pression, et notamment la direction 36 de son vecteur 35, découle directement des caractéristiques physiques de la porte d'aéronef telles que ses dimensions et ses différentes courbures.

Ainsi, à partir des caractéristiques physiques de la porte d'aéronef, il est possible de déterminer par le calcul ou par expérimentation la direction 36 du vecteur 35 de la résultante de pression. Lors de la fabrication de la porte d'aéronef, les butées 22, 23 et leur surface d'appui 26, 27, ainsi que le choix de l'orientation angulaire dans la fixation des butées 22, 23, sont alors réalisées pour que la normale 34 à l'aire de contact 30 passant par son isobarycentre 31 présente le même angle de déviation 37 par rapport au plan 32 que l'angle 43 entre la direction 36 du vecteur 35 de la résultante de pression et le plan 44 perpendiculaire à l'axe longitudinal 21.

Dans l'exemple illustré, où l'aire de contact 30 est une aire plane rectangulaire, les surfaces d'appui 26, 27 sont orientées selon des plans 28, 29 parallèles dont la normale forme avec le plan 32, 33 correspondant un angle sensiblement égal à l'angle de déviation 37, ou égal à cet angle 37 additionné de 180 degrés.

Les vecteurs 40 illustrant les forces de réaction des butées 23 d'encadrement s'étendent suivant la normale 34.

La figure 11 est une vue similaire à la figure 8, ne représentant pas les butées 22, 23 mais seulement les isobarycentres 31A et 31B aussi bien du premier bord latéral 24 que du deuxième bord latéral 25, projetés sur cette même vue en deux dimensions. Cette figure 11 montre ainsi le profil de la disposition de tous les isobarycentres 31A, 31B les uns par rapport aux autres dans cette projection.

En référence à la figure 11, les normales 34 à chaque aire de contact 30 passant par son isobarycentre 31A, 31B passent par l'axe 41 d'un cylindre prédéterminé qui est ici dénommé « cylindre moyen » 42.

Le cylindre moyen 42 est ici défini comme un cylindre dont l'axe 41 est parallèle à l'axe longitudinal 21 et dont le rayon R est tel que la somme des distances entre chaque isobarycentre 31A du premier bord latéral 24 et le cylindre moyen 42 soit égale à la somme des distances entre les isobarycentres 31B du deuxième bord latéral 25 et le cylindre moyen 42.

La distance entre un isobarycentre 31 et le cylindre moyen 42 s'entend comme mesurée le long d'une normale à la surface du cylindre qui passe par l'isobarycentre 31 en question.

Dans l'exemple illustré à la figure 11, la porte d'aéronef comporte six paires de butées 22, 23 sur chacun des bords latéraux 24, 25, ce qui correspond à un cylindre moyen 42 tel que :

$$D1 + D2 + D3 + D4 + D5 + D6 = d1 + d2 + d3 + d4 + d5 + d6$$

De même que précédemment, l'orientation angulaire des plans 28, 29 des butées 22, 23 est telle que la normale à chaque aire de contact 30 passant par son isobarycentre 31 passe par l'axe 41 du cylindre moyen 42. Par conséquent, toutes les forces de réaction 40 des butées 23 d'encadrement sous l'effet de la pressurisation de l'aéronef, sont centrées sur cet axe 41.

Selon une caractéristique préférée qui améliore encore la répartition des efforts dans la porte, le cylindre moyen 42 est de plus choisi tel que son axe 41 et la direction 36 de la résultante de pression soient sécants. La position du cylindre moyen 42 permet ainsi à son axe 41 et au vecteur 35 de la résultante de pression d'être situés sur un même plan.

La présente description indique ainsi les caractéristiques physiques à mettre en œuvre pour la conception et l'agencement des butées 22, 23 de la porte d'aéronef 18 en ce qui concerne :

- le positionnement de chaque paire de butées 22, 23 (en déterminant le positionnement de chaque isobarycentre 31) ;
- l'orientation angulaire dans toutes les dimensions des surfaces d'appui 26, 27 des butées 22, 23, que ce soit par la forme des butées 22, 23 ou par leur orientation de montage respectivement sur l'ouvrant 19 ou l'encadrement 20.

L'axe longitudinal 21, bien qu'étant relatif à l'aéronef lui-même, est cependant une caractéristique intrinsèque de la porte d'aéronef, car cette dernière est réalisée en orientant sa double courbure de manière prédéterminée par rapport à l'axe longitudinal 21. De même, la résultante de pression est également une caractéristique intrinsèque de la porte d'aéronef car, si son intensité varie en fonction de la pression appliquée sur la porte sous l'effet de la pressurisation de la cabine, sa direction est cependant constante et dépend uniquement des caractéristiques géométriques de la porte.

Des variantes de réalisation peuvent être mises en œuvre. Par exemple, les butées 22, 23 peuvent présenter toute forme alternative permettant un positionnement des isobarycentres comme décrit précédemment.

Dans les modes de réalisation décrits précédemment, toutes les butées 22, 23 sont conformées et fixées de sorte que les normales 34 aux aires de contact 30 passant par leur isobarycentre 31A, 31B passe sensiblement par l'axe 41 du cylindre moyen 42. Le terme « sensiblement » indique que l'orientation de ces normales 34 peut cependant varier de quelques degrés autour de la position correspondant exactement à l'axe 41 du cylindre moyen 42. De préférence, une légère variation de cette orientation angulaire est prévue dans un sens allant à l'encontre de la cinématique du mécanisme d'ouverture de la porte. Autrement dit, les aires de contact 30 peuvent être inclinées dans un sens impliquant un passage de ladite normale légèrement au-dessus de l'axe 41, ou sont inclinés dans un sens impliquant un passage de ladite normale 34 légèrement au-dessus de l'axe 41, et ce sens est choisi pour créer une pente de verrouillage ayant pour effet que, lorsque la porte est mise sous pression, cet effort tende à verrouiller la porte plutôt qu'a la déverrouiller. Une sécurisation des moyens de verrouillage est ainsi obtenue au prix d'une légère augmentation de l'effort de déverrouillage (qui n'est pas pénalisante).

Selon un mode de réalisation, toutes les aires de contact 30 sont orientées de sorte que la normale 34 passe sensiblement par l'axe 41 du cylindre moyen 42, et un ensemble de butées supplémentaires est prévu avec des aires de contact qui sont plus fortement orientées à l'encontre de la cinématique du mécanisme d'ouverture de la porte, pour obtenir le même type d'effet décrit au paragraphe précédent.

**Revendications**

1. Porte d'aéronef à double courbure destinée à un aéronef qui s'étend selon un axe longitudinal (21), cette porte d'aéronef présentant au moins une configuration de verrouillage et une configuration d'ouverture, cette porte d'aéronef comportant :

   - un ouvrant (19) et un encadrement (20), l'ouvrant (19) étant articulé par rapport à l'encadrement (20) ;
   - des moyens de verrouillage comportant des butées (22) d'ouvrant et des butées (23) d'encadrement, chaque butée (22) d'ouvrant étant positionnée contre une butée (23) d'encadrement correspondante lorsque la porte d'aéronef est dans sa configuration de verrouillage, chaque butée (22) d'ouvrant et sa butée (23) d'encadrement correspondante formant une paire de butées complémentaires qui comportent des surfaces d'appui (26,27) qui sont en contact selon une aire de contact (30) lorsque la porte d'aéronef est dans sa configuration de verrouillage, lesdites paires de butées complémentaires étant agencées sur un premier bord latéral (24) et sur un deuxième bord latéral (25) de la porte d'aéronef, les aires de contact (30) correspondantes étant agencées selon au moins deux ensembles : un premier ensemble d'aires de contact du premier bord latéral ; et un deuxième ensemble d'aires de contact du deuxième bord latéral ;

   dans laquelle :

   - l'isobarycentre (31A) de chaque aire de contact (30) du premier bord latéral (24) est disposé dans un premier plan (32) perpendiculaire, dans un état monté de la porte d'aéronef, audit axe longitudinal (21) ;
   - l'isobarycentre (31B) de chaque aire de contact (30) du deuxième bord latéral (25) est disposé dans un deuxième plan (33) perpendiculaire, dans l'état monté de la porte d'aéronef, audit axe longitudinal (21) ;
   - pour chaque aire de contact (30), la normale (34) à l'aire de contact (30) passant par son isobarycentre (31A,31B), passe par l'axe (41) d'un cylindre moyen (42), le cylindre moyen (42) étant défini comme le cylindre à base circulaire dont l'axe (41) est parallèle, dans l'état monté de la porte d'aéronef, audit axe longitudinal (21) et dont le rayon (R) vérifie la condition suivante : la somme des distances (D1,D2,D3,D4,D5,D6) entre l'isobarycentre (31A) de chaque aire de contact (30) du premier bord latéral (24) et le cylindre moyen (42) est égal à la somme des distances (d1,d2,d3,d4,d5,d6) entre l'isobarycentre (31B) de chaque aire de contact (30) du deuxième bord latéral (25) et le cylindre moyen (42) ;
   - pour chaque aire de contact (30), la normale (34) à l'aire de contact (30) passant par son isobarycentre (31A,31B) forme un angle de déviation (37) avec un plan (32, 33) perpendiculaire, dans l'état monté de la porte d'aéronef, audit axe longitudinal (21), les angles de déviation (37) de toutes les aires de contact (30) étant égaux.

2. Porte d'aéronef selon la revendication 1, **caractérisée en ce que** l'isobarycentre (31A) de chaque aire de contact (30) du premier bord latéral (24) est également disposé sur une première surface (38) parallèle à la surface extérieure de l'ouvrant (19).

3. Porte d'aéronef selon la revendication 2, **caractérisée en ce que** l'isobarycentre (31B) de chaque aire de contact (30) du deuxième bord latéral (25) est également disposé sur une deuxième surface (39) parallèle à la surface extérieure de l'ouvrant (19).

4. Porte d'aéronef selon l'une des revendications précédentes, **caractérisée en ce que** l'axe (41) du cylindre moyen et la direction résultante de pression (36) sont sécants, la direction résultante de pression (36) étant définie comme la direction de la force résultante (35) s'appliquant sur l'ouvrant (19) de la porte d'aéronef lorsqu'elle est soumise à une pression.

5. Porte d'aéronef selon l'une des revendications précédentes, **caractérisée en ce que** l'angle de déviation (37) est égal à l'angle (43) formé entre la direction résultante de pression (36) et un plan (44) perpendiculaire, dans l'état monté de la porte d'aéronef, audit axe longitudinal (21), la direction résultante de pression (36) étant définie comme la direction de la force résultante (35) s'appliquant sur l'ouvrant (19) de la porte d'aéronef lorsqu'elle est soumise à une pression.

6. Porte d'aéronef selon l'une des revendications précédentes, **caractérisée en ce que** les butées (23) d'encadrement du premier bord latéral (24) sont identiques entre elles.

7. Porte d'aéronef selon l'une des revendications précédentes, **caractérisée en ce que** les butées (23) d'encadrement du deuxième bord latéral (25) sont identiques entre elles.

8. Porte d'aéronef selon l'une des revendications précédentes, **caractérisée en ce que** les butées (22) d'ouvrant du premier bord latéral (24) sont identiques entre elles.

9. Porte d'aéronef selon l'une des revendications précédentes, **caractérisée en ce que** les butées (22) d'ouvrant du deuxième bord latéral (25) sont identiques entre elles.

10. Porte d'aéronef selon l'une des revendications précédentes, **caractérisée en ce que** les aires de contact (30) s'étendent selon un plan de contact (28,29) orienté angulairement sur la butée (22,23) correspondante selon au moins une direction.

11. Porte d'aéronef selon la revendication 10, **caractérisée en ce que** les aires de contact (30) ont une forme rectangulaire plane ou circulaire plane.

12. Porte d'aéronef selon la revendication 2, et éventuellement selon l'une des revendications 3 à 11, **caractérisée en ce que** la première surface parallèle (38) à la surface extérieure de l'ouvrant (19) est espacée d'une première distance constante (E1) par rapport à la surface extérieure de l'ouvrant (19).

13. Porte d'aéronef selon la revendication 3, et éventuellement selon l'une des revendications 4 à 12, **caractérisée en ce que** la deuxième surface parallèle (39) à la surface extérieure de l'ouvrant (19) est espacée d'une deuxième distance constante (E2) par rapport à la surface extérieure de l'ouvrant (19).

14. Porte d'aéronef selon la revendication 13 lorsqu'elle dépend de la revendication 12, **caractérisée en ce que** la première distance constante (E1) et la deuxième distance constante (E2) sont différentes.

15. Porte d'aéronef selon la revendication 13 lorsqu'elle dépend de la revendication 12, **caractérisée en ce que** la première distance constante (E1) et la deuxième distance constante (E2) sont égales.

16. Porte d'aéronef selon l'une des revendications précédentes, **caractérisée en ce qu'**elle comporte un mécanisme d'ouverture, et **en ce qu'**elle comporte en outre un ensemble supplémentaire de butées définissant des aires de contact dont la normale passant par leur isobarycentre passe à l'écart de l'axe (41) du cylindre moyen (42), d'un côté correspondant à une opposition à la cinématique du mécanisme d'ouverture.


## Patentansprüche

1. Doppelbogen-Flugzeugtür, die für ein Flugzeug bestimmt ist, das sich entlang einer Längsachse (21) erstreckt, wobei diese Flugzeugtür mindestens eine Verriegelungskonfiguration und eine Öffnungskonfiguration aufweist, wobei diese Flugzeugtür umfasst:

- einen Flügel (19) und einen Rahmen (20), wobei der Flügel (19) in Bezug auf den Rahmen (20) angelenkt ist;
- Verriegelungsmittel, umfassend Flügelanschläge (22) und Rahmenanschläge (23), wobei jeder Flügelanschlag (22) gegen einen entsprechenden Rahmenanschlag (23) positioniert ist, wenn die Flugzeugtür in ihrer Verriegelungskonfiguration ist, wobei jeder Flügelanschlag (22) und sein entsprechender Rahmenanschlag (23) ein Paar komplementäre Anschläge bilden, die Anlageflächen (26,27) umfassen, die gemäß einer Kontaktfläche (30) in Kontakt sind, wenn die Flugzeugtür in ihrer Verriegelungskonfiguration ist, wobei die Paare komplementärer Anschläge an einem ersten seitlichen Rand (24) und an einem zweiten seitlichen Rand (25) der Flugzeugtür eingerichtet sind, wobei die entsprechenden Kontaktflächen (30) gemäß mindestens zwei Gruppen eingerichtet sind: eine erste Kontaktflächengruppe des ersten seitlichen Rands; und eine zweite Kontaktflächengruppe des zweiten seitlichen Rands;

wobei:

- das Isobaryzentrum (31A) jeder Kontaktfläche (30) des ersten seitlichen Rands (24) in einer ersten Ebene (32) angeordnet ist, die, in einem montierten Zustand der Flugzeugtür, senkrecht zu der Längsachse (21) verläuft;
- das Isobaryzentrum (31B) jeder Kontaktfläche (30) des zweiten seitlichen Rands (25) in einer zweiten Ebene (33) angeordnet ist, die, in dem montierten Zustand der Flugzeugtür, senkrecht zu der Längsachse (21) verläuft;
- für jede Kontaktfläche (30) die Normale (34) zu der Kontaktfläche (30), die durch ihr Isobaryzentrum (31A,31B) verläuft, durch die Achse (41) eines mittleren Zylinders (42) verläuft, wobei der mittlere Zylinder (42) definiert ist als der Zylinder mit kreisförmiger Grundfläche, dessen Achse (41), in dem montierten Zustand der Flugzeugtür, parallel zu der Längsachse (21) ist und dessen Radius (R) die folgende Bedingung erfüllt: die Summe der Abstände (D1,D2,D3,D4,D5,D6) zwischen dem Isobaryzentrum (31A) jeder Kontaktfläche (30) des ersten seitlichen Rands (24) und dem mittleren Zylinder (42) ist gleich der Summe der Abstände (d1,d2,d3,d4,d5,d6) zwischen dem Isobaryzentrum (31B) jeder Kontaktfläche (30) des zweiten seitlichen Rands (25) und dem mittleren Zylinder (42);

- für jede Kontaktfläche (30) die Normale (34) zu der Kontaktfläche (30), die durch ihr Isobaryzentrum (31A,31B) verläuft, einen Ablenkungswinkel (37) mit einer Ebene (32, 33) bildet, die, in dem montierten Zustand der Flugzeugtür, senkrecht zu der Längsachse (21) verläuft, wobei die Ablenkungswinkel (37) aller Kontaktflächen (30) gleich sind.

2. Flugzeugtür nach Anspruch 1, **dadurch gekennzeichnet, dass** das Isobaryzentrum (31A) jeder Kontaktfläche (30) des ersten seitlichen Rands (24) auch auf einer ersten Oberfläche (38) angeordnet ist, die parallel zu der Außenoberfläche des Flügels (19) ist.

3. Flugzeugtür nach Anspruch 2, **dadurch gekennzeichnet, dass** das Isobaryzentrum (31B) jeder Kontaktfläche (30) des zweiten seitlichen Rands (25) auch auf einer zweiten Oberfläche (39) angeordnet ist, die parallel zu der Außenoberfläche des Flügels (19) ist.

4. Flugzeugtür nach einem der vorhergehenden Ansprüche, **dadurch gekennzeichnet, dass** die Achse (41) des mittleren Zylinders und die resultierende Druckrichtung (36) einander schneiden, wobei die resultierende Druckrichtung (36) als die Richtung der resultierenden Kraft (35) definiert ist, die an dem Flügel (19) der Flugzeugtür angreift, wenn sie einem Druck ausgesetzt ist.

5. Flugzeugtür nach einem der vorhergehenden Ansprüche, **dadurch gekennzeichnet, dass** der Ablenkungswinkel (37) gleich dem Winkel (43) ist, der zwischen der resultierenden Druckrichtung (36) und einer Ebene (44), die, in dem montierten Zustand der Flugzeugtür, senkrecht zu der Längsachse (21) verläuft, gebildet wird, wobei die resultierende Druckrichtung (36) als die Richtung der resultierenden Kraft (35) definiert ist, die an dem Flügel (19) der Flugzeugtür angreift, wenn sie einem Druck ausgesetzt ist.

6. Flugzeugtür nach einem der vorhergehenden Ansprüche, **dadurch gekennzeichnet, dass** die Rahmenanschläge (23) des ersten seitlichen Rands (24) untereinander gleich sind.

7. Flugzeugtür nach einem der vorhergehenden Ansprüche, **dadurch gekennzeichnet, dass** die Rahmenanschläge (23) des zweiten seitlichen Rands (25) untereinander gleich sind.

8. Flugzeugtür nach einem der vorhergehenden Ansprüche, **dadurch gekennzeichnet, dass** die Flügelanschläge (22) des ersten seitlichen Rands (24) untereinander gleich sind.

9. Flugzeugtür nach einem der vorhergehenden Ansprüche, **dadurch gekennzeichnet, dass** die Flügelanschläge (22) des zweiten seitlichen Rands (25) untereinander gleich sind.

10. Flugzeugtür nach einem der vorhergehenden Ansprüche, **dadurch gekennzeichnet, dass** sich die Kontaktflächen (30) entlang einer Kontaktebene (28,29) erstrecken, die winklig auf dem entsprechenden Anschlag (22,23) entlang mindestens einer Richtung ausgerichtet ist.

11. Flugzeugtür nach Anspruch 10, **dadurch gekennzeichnet, dass** die Kontaktflächen (30) eine rechteckige ebene oder kreisförmige ebene Form haben.

12. Flugzeugtür nach Anspruch 2 und gegebenenfalls nach einem der Ansprüche 3 bis 11, **dadurch gekennzeichnet, dass** die erste Oberfläche (38), die parallel zu der Außenoberfläche des Flügels (19) ist, um einen konstanten ersten Abstand (E1) von der Außenoberfläche des Flügels (19) beabstandet ist.

13. Flugzeugtür nach Anspruch 3 und gegebenenfalls nach einem der Ansprüche 4 bis 12, **dadurch gekennzeichnet, dass** die zweite Oberfläche (39), die parallel zu der Außenoberfläche des Flügels (19) ist, um einen konstanten zweiten Abstand (E2) von der Außenoberfläche des Flügels (19) beabstandet ist.

14. Flugzeugtür nach Anspruch 13, wenn er von Anspruch 12 abhängig ist, **dadurch gekennzeichnet, dass** der konstante erste Abstand (E1) und der konstante zweite Abstand (E2) verschieden sind.

15. Flugzeugtür nach Anspruch 13, wenn er von Anspruch 12 abhängig ist, **dadurch gekennzeichnet, dass** der konstante erste Abstand (E1) und der konstante zweite Abstand (E2) gleich sind.

16. Flugzeugtür nach einem der vorhergehenden Ansprüche, **dadurch gekennzeichnet, dass** sie einen Öffnungsmechanismus umfasst, und dadurch, dass sie ferner eine zusätzliche Gruppe von Anschlägen umfasst, die Kontaktflächen definieren, deren Normale, die durch ihr Isobaryzentrum verläuft, im Abstand von der Achse (41) des mittleren Zylinders (42) verläuft, auf einer Seite, die einem Widerstand gegen die Kinematik des Öffnungsmechanismus entspricht.

**Claims**

1. A double-curved aircraft door intended for an aircraft that extends along a longitudinal axis (21), this aircraft door having at least one locked configuration and one open configuration, this aircraft door including:

   - a leaf (19) and a frame (20), the leaf (19) being articulated relative to the frame (20);
   - locking means including leaf stops (22) and frame stops (23), each leaf stop (22) being positioned against a corresponding frame stop (23) when the aircraft door is in its locked configuration, each leaf stop (22) and its corresponding frame stop (23) forming a pair of complementary stops that include bearing surfaces (26, 27) that are in contact in an area of contact (30) when the aircraft door is in its locked configuration, said pairs of complementary stops being arranged on a first lateral edge (24) and on a second lateral edge (25) of the aircraft door, the corresponding areas of contact (30) being arranged in at least two sets: a first set of contact areas of the first lateral edge and a second set of contact areas of the second lateral edge;

   wherein

   - the isobarycenter (31A) of each contact area (30) of the first lateral edge (24) is disposed in a first plane (32) perpendicular, in a fitted state of the aircraft door, to said longitudinal axis (21);
   - the isobarycenter (31B) of each contact area (30) of the second lateral edge (25) is disposed in a second plane (33) perpendicular, in the fitted state of the aircraft door, to said longitudinal axis (21);
   - for each contact area (30) the normal (34) to the contact area (30) passing through its isobarycenter (31A, 31B) passes through the axis (41) of a mean cylinder (42), the mean cylinder (42) being defined as the circular base cylinder the axis (41) of which is parallel, in the fitted state of the aircraft door, to said longitudinal axis (21) and the radius (R) of which satisfies the following condition: the sum of the distances (D1,D2,D3,D4,D5,D6) between the isobarycenter (31A) of each contact area (30) of the first lateral edge (24) and the mean cylinder (42) is equal to the sum of the distances (d1,d2,d3,d4,d5,d6) between the isobarycenter (31B) of each contact area (30) of the second lateral edge (25) and the mean cylinder (42);
   - for each contact area (30) the normal (34) to the contact area (30) passing through its isobarycenter (31A, 31B) forms a deviation angle (37) with a plane (32, 33) perpendicular, in the fitted state of the aircraft door, to said longitudinal axis (21), the deviation angles (37) of all the contact areas (30) being equal.

2. The aircraft door as claimed in claim 1, **characterized in that** the isobarycenter (31A) of each contact area (30) of the first lateral edge (24) is also disposed on a first surface (38) parallel to the exterior surface of the leaf (19).

3. The aircraft door as claimed in claim 2, **characterized in that** the isobarycenter (31B) of each contact area (30) of the second lateral edge (25) is also disposed on a second surface (39) parallel to the exterior surface of the leaf (19).

4. The aircraft door as claimed in any one of the preceding claims, **characterized in that** the axis (41) of the mean cylinder and the pressure resultant direction (36) intersect, the pressure resultant direction (36) being defined as the direction of the resultant force (35) applied to the leaf (19) of the aircraft door when it is subjected to a pressure.

5. The aircraft door as claimed in any one of the preceding claims, **characterized in that** the deviation angle (37) is equal to the angle (43) formed between the pressure resultant direction (36) and a plane (44) perpendicular, in the fitted state of the aircraft door, to said longitudinal axis (21), the pressure resultant direction (36) being defined as the direction of the resultant force (35) applied to the leaf (19) of the aircraft door when it is subjected to a pressure.

6. The aircraft door as claimed in any one of the preceding claims, **characterized in that** the frame stops (23) of the first lateral edge (24) are identical.

7. The aircraft door as claimed in any one of the preceding claims, **characterized in that** the frame stops (23) of the second lateral edge (25) are identical.

8. The aircraft door as claimed in any one of the preceding claims, **characterized in that** the leaf stops (22) of the first lateral edge (24) are identical.

9. The aircraft door as claimed in any one of the preceding claims, **characterized in that** the leaf stops (22) of the second lateral edge (25) are identical.

10. The aircraft door as claimed in any one of the preceding claims, **characterized in that** the contact areas (30) extend in a contact plane (28, 29) oriented angularly on the corresponding stop (22, 23) in at least one direction.

11. The aircraft door as claimed in claim 10, **characterized in that** the contact areas (30) have a plane rectangular or plane circular shape.

12. The aircraft door as claimed in any one of claims 2 to 11, **characterized in that** the first surface (38) parallel to the exterior surface of the leaf (19) is spaced by a constant first distance (E1) from the exterior surface of the leaf (19).

13. The aircraft door as claimed in any one of claims 3 to 12, **characterized in that** the second surface (39) parallel to the exterior surface of the leaf (19) is spaced by a constant second distance (E2) from the exterior surface of the leaf (19).

14. The aircraft door as claimed in claim 13 when dependent on claim 12, **characterized in that** the first constant distance (E1) and the second constant distance (E2) are different.

15. The aircraft door as claimed in claim 13 when dependent on claim 12, **characterized in that** the first constant distance (E1) and the second constant distance (E2) are equal.

16. The aircraft door as claimed in any one of the preceding claims, **characterized in that** it includes an opening mechanism and **in that** it further includes a supplementary set of stops defining contact areas the normal to which passing through their isobarycenter is at a distance from the axis (41) of the mean cylinder (42) on a side corresponding to opposition to the kinematic of the opening mechanism.

Fig. 1

Fig. 2

Fig. 3

Fig. 4

Fig. 5

Fig. 6

Fig. 7

Fig. 8

Fig. 9

Fig. 10

Fig. 11

**EP 4 188 796 B1**

**RÉFÉRENCES CITÉES DANS LA DESCRIPTION**

**Documents brevets cités dans la description**

- GB 2042060 A